# FASCICULE DE BREVET EUROPEEN

(11) **EP 0 252 865 B1**
(45) Date de publication et mention de la délivrance du brevet: **19.04.1995**
(21) Numéro de dépôt: 87500040.8
(22) Date de dépôt: 19.06.1987
(51) Int. Cl.: A22C 7/00

(54) **Machine semi-automatique pour l'élaboration des hamburgers**
Halbautomatische Maschine zum Herstellen von Hamburgern
Semi-automatic machine for preparing hamburgers

(43) Date de publication de la demande: 13.01.1988
(73) Titulaire: Bosch Puig, Agustin, Girona (ES)
(72) Inventeur: Bosch Puig, Agustin, Girona (ES)
(74) Mandataire: Marques Alos, Fernando

(56) Documents cités:
- FR-A- 1 021 321
- FR-A- 1 172 468
- FR-A- 1 261 193
- GB-A- 2 030 444
- US-A- 2 784 448
- US-A- 2 795 816
- US-A- 2 971 133
- US-A- 4 138 768

## Description

Jusqu'à présent, l'élaboration des hamburgers se faisait à l'aide de simples moules dans lesquels on introduisait une certaine quantité de viande hachée qui était comprimée de façon à adopter leur forme caractéristique, grâce à un piston commandé manuellement par un levier, ou à l'aide de machines automatiques qui, à partir d'un cordon de viande, réalisaient les hamburgers en découpant ce cordon à l'aide d'un emporte-pièce qui leur donnait leur forme exacte.

Ces machines sont très compliquées et ont pour conséquence un prix de vente élevé et comme d'autre part, elles sont commandées par des pistons hydrauliques, elles obligent le propriétaire à acquérir un compresseur à air, ce qui rend l'investissement nécessaire pour l'útilisation de ces appareils réellement élevé et d'un amortissement à trop long terme.

On connait déjà des machines semi-automatiques pour l'élaboration des hamburgers qui possèdent la simplicité des machines manuelles tout en offrant la grande capacité de production des machines automatiques. Une telle machine, conformant à la preambule de la revendication, est connue particulièrement de la demande de brevet GB-A-2030444.

La machine selon l'invention réalise les hamburgers à partir d'un cordon de viande qui est sectionné par une tête de découpe entraînée par un levier manuel, à l'intérieur de laquelle se trouve un mécanisme d'extraction du hamburger qui reçoit ainsi sa forme à l'interieur de l'emporte-pièce et nécessite ce mécanisme pour en être extrait.

Pour faire varier la vitesse de production la machine semi-automatique est placée sur un support inclinable, articulé au bâti, grâce auquel, en accentuant ou en diminuant la pente, le cordon de viande se déplace plus ou moins vite.

A fin d'illustrer ce que est exposé ci-dessus, on trouvera jointes au présent mémoire descriptif et formant partie intégrante de celui-ci, deux pages de plans sur lesquelles on a réalisé, de façon simplifiée et schématique, un example d'execution, simplement illustratif, non limitatif des possibilités pratiques de réalisation.

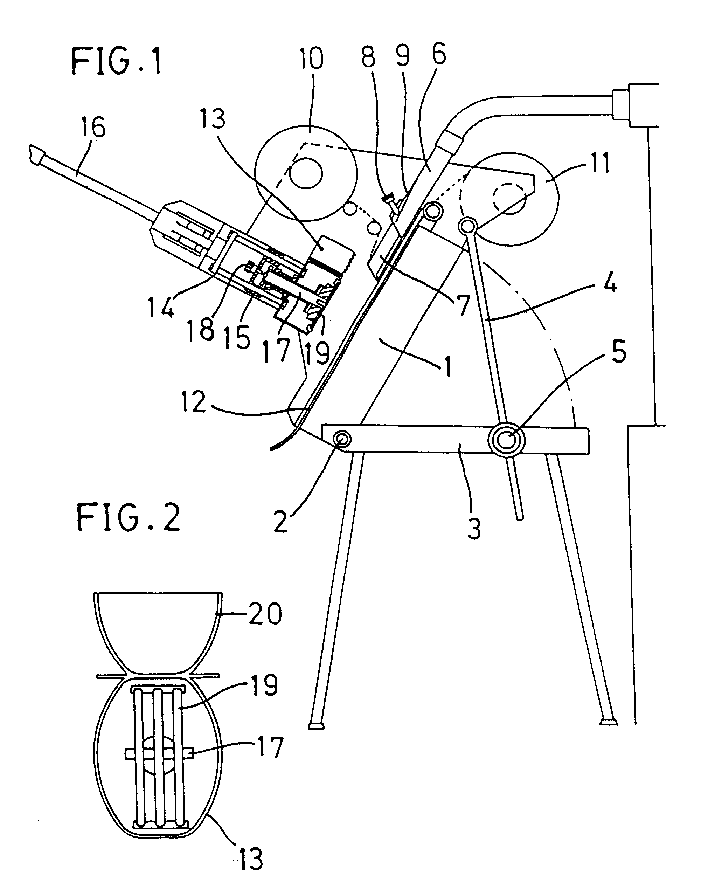

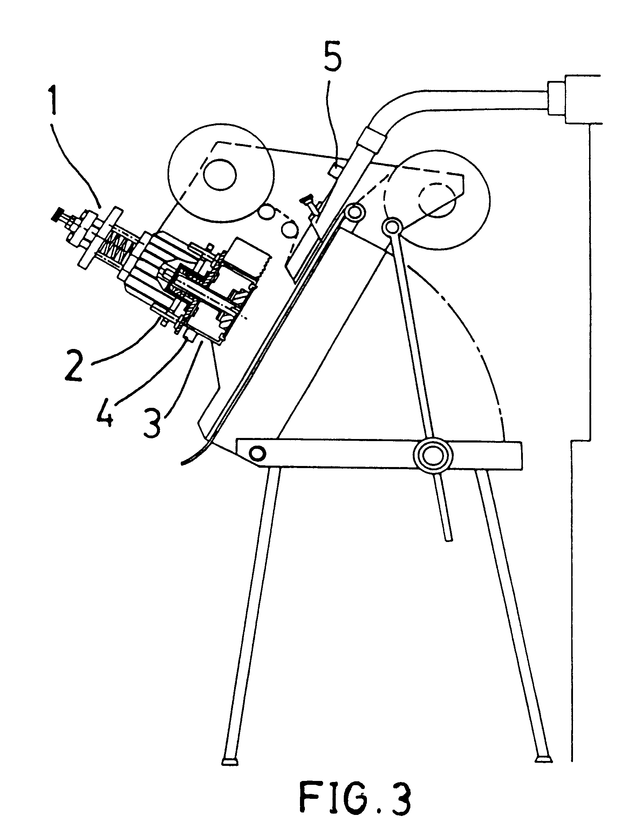

On a représenté sur la figure 1 une vue sectionnée de la nouvelle machine semi-automatique pour la confection des hamburgers.

On a représenté sur la figure 2 une vue de la tête de découpe sur laquelle on peut voir une partie du système d'extraction du hamburger.

Selon les plans, la nouvelle machine comprend: un châssis (-1-) articulé au moyen d'un axe (-2-) sur un bâti (-3-), la position du châssis pouvant être réglée sur un angle déterminé à l'aide d'une tige (-4-) comportant à sa partie inférieure une commande filetée (-5-).

Sur le châssis se trouve la bouche d'alimentation en viande hachée (-6-) d'où sort un cordon de viande (-7-) dont le volume est réglable au moyen d'une vis (-8-) solidaire d'une plaque interne (-9-) de la bouche d'alimentation, de telle sorte qu'en poussant cette vis contre la plaque, la section de passage de la viande diminue et avec celleci le volume du cordon de viande (-7-).

Sur ce cordon de viande sont disposées deux bandes en polyétylène qui se déroulent à partir de deux bobines (-10- et -11-) placées à la partie haute du châssis; de cette façon, le cordon se déplace plus facilement par la rampe de descente (-12-) puis entre ensuite dans la zone de découpe, où une tête de découpe (-13-) le découpe, confectionnant ainsi les hamburgers.

Cette tête de découpe est placée à l'extrêmité d'un plongeur double (-14-) qui se déplace à l'intérieur d'un support (-15-) et qui est actionné par un levier (-16-).

A l'intérieur de la tête de découpe se trouve un dispositif d'extraction du hamburger qui revient à l'interieur de la tête lorsque la découpe a été réalisée. Ce mécanisme d'extraction comprend un piston (-17-) dont la course est inférieure à celle du plongeur car sa position finale est fixée par la butée (-18-) placée sur le support (-15-), de telle sorte que lorsque ce piston arrive à la fin de sa course ascendante, le plongeur monte encore de quelques centimètres et par conséquent, les caoutchoucs (-19-) fixés à l'intérieur de la tête de découpe se courbent en raison de la différence de niveau entre leurs extrêmités et leur partie centrale en contact avec la base inférieure du piston (-17-). Lorsque le hamburger se détache de l'intérieur de l'emporte-pièce, il tombe sur la rampe de descente (-12-) sur laquelle il se déplace jusqu'à ce qu'il arrive à un plateau ou à une bande transporteuse.

Avant que s'effectue la découpe finale du cordon de viande, on réalise une pré-découpe avec la partie avant de la tête de découpe (-20-), ce qui permet de mieux utiliser la viande, bien que cette pré-découpe ne soit pas indispensable, ce qui fait qu'on peut supprimer la couronne dentée (-20-).

On a introduit dans ce brevet les améliorations suivantes:
- La nouveauté consiste dans le fait que la tête de découpe descend au moyen d'un électro-aimant qui déplace un piston de poussée, qui fait descendre à son tour la tête de découpe dans laquelle est placée une cellule de commande qui contrôle les mouvements de l'électro-aimant en le faisant descendre lorsque la tête de découpe a expulsé le hamburger précédent.
- La machine a également été munie d'une deuxième cellule de contrôle afin qu'elle s'arrête lorsque le cordon de viande d'alimentation se termine.

Afin d'illustrer tout ce qui a été exposé ci-dessus, nous joignons au présent mémoire descriptif, comme partie intégrante de celui-ci, una deuxième page de plans sur laquelle a été représenté de façon simplifiée et schématique un exemple de réalisation uniquement illustratif et non limitatif des possibilités pratiques de l'invention.

En tant que nouveautés, la machine semi-automatique pour l'élaboration des hamburgers comporte un électro-aimant (-1-) qui déplace un piston de poussée (-2-), qui fait descendre la tête de découpe (-3-) dans laquelle se trouve une cellule de commande (-4-) qui active à nouveau l'électro-aimant lorsque la tête a expulsé le hamburger précédemment formé.

Cette machine a également été munie d'une deuxième cellule de contrôle (-5-) qui l'arrête lorsque l'alimentation en viande se termine sur celle-ci.

## Revendications

1. Machine à façonner les hamburgers, comprenant un châssis (1) monté sur un bâti (3), une tête de découpe (13) et un dispositif (6) permettant d'alimenter la machine en viande hachée, lequel dispositif (6) se situe sur la partie supérieure dudit châssis (1), une plaque mobile (9), fonctionnant à d'une vis, se trouvant à l'intérieur du dispositif (6), ladite plaque mobile ayant pour objet de régler la grosseur du cordon de viande (7) lorsqu'il sort du dispositif (6), le cordon (7) étant recouvert de bandes en polyéthylène distribuées à l'aide de bobines (10) et (11) convenablement placées sur la partie supérieure dudit châssis (1), et la tête de découpe (13) étant montée sur la partie médiane du châssis (1), ladite tête (13) permettant la découpe du cordon (7) de viande et comportant un piston de poussée (17) activé par un électro-aimant, ladite tête (13) comportant en outre une cellule de commande qui contrôle les mouvements de l'électro-aimant ,**caractérisée** en ce que la machine est munie d'une deuxième cellule de commande afin d'arrêter ladite machine lorsque le cordon de viande (7) est épuisé, en ce que la tête (13) comporte un système à élastiques d'éjection des hamburgers découpés, en ce que ladite tête consiste d'une partie avant de pré-découpe et d'une partie de découpe finale et en ce que ledit bâti (3) est réglable en inclinaison par une tige (4) pouvant être immobilisée par une vis (5).

## Claims

1. A machine for making hamburgers, comprising a chassis (1) mounted on a support (3), a cutting out head (13) and a device (6) which enables minced meat to be fed onto the machine, said device (6) being situated on the upper part of said chassis (1), a moveable plate (9), operating by means of a screw, being located inside the device (6), the purpose of said moveable plate being to regulate the thickness of the strand of meat (7) as it emerges from the device (6), the strand (7) being covered with strips of polythene which are administered with the help of reels (10) and (11) conveniently placed on the upper part of said chassis (1), and the cutting out head (13) being mounted on the mid part of the chassis (1), said head (13) enabling the strand of meat (7) to be cut out and comprising a thrust piston (17) activated by an electromagnet, said head (13) further comprising a control cell which controls the movements of the electromagnet, characterized in that the machine is provided with a second control cell in order to stop said machine when the strand of meat (7) is finished, wherein the head (13) comprises a system of elastic bands for ejecting the cut out hamburgers, wherein said head consists of a advance part for pre-cutting and a part for final cutting and wherein the inclination of said support (3) is adjustable by means of a shaft (4) and can be fixed by means of a screw (5).

## Patentansprüche

1. Hamburgerformmaschine bestehend aus einem auf einem Gehäuse (3) montierten Chassis (1), einem Stanzkopf (13), einer Vorrichtung (6) zur Beschickung der Maschine mit Hackfleisch, weiche sich im oberen Teil des o.g. Chassis (1) befindet, sowie einer beweglichen Platte (9), welche mit einer Schnecke betrieben wird und im Inneren der Vorrichtung (6) angebracht ist. Aufgabe der o.g. beweglichen Platte ist es, die Fleischstrangdicke (7) beim Austritt aus der Vorrichtung zu regeln, wobei der Strang (7) über die zu diesem Zweck auf der Oberseite des o.g. Gehäuses (1) angebrachten Spulen (10) und (11) mit einer Polyäthylenfolie überzogen wird. Der Stanzkopf (13) ist am Mittelteil des Chassis angebracht; der o.g. Stanzkopf (13) ermöglicht das Stanzen des Fleischstranges (7) und ist mit einem elektromagnetisch gesteuerten Schlagkolben ausgestattet, der o.g. Stanzkopf (13) ist außerdem mit einer Steuerzelle ausgestattet, welche die Bewegungen des Elektromagneten überwacht. Die Maschine ist mit einer zweiten Steuerzelle ausgerüstet, um den beschriebenen Vorgang anzuhalten, sobald der Fleischstrang (7) unterbrochen wird. Der Stanzkopf (13) verfügt über ein verstellbares Auswurfsystem für die geformten Hamburger, bei dem der Stanzkopf aus einem Vorformteil und einem Endformteil besteht und bei dem der Neigungswinkel des o.g. Gehäuses (3) über einen Hebel, dessen Position mit einer Schraube (5) fixiert werden kann, einstellbar ist.
